# EUROPÄISCHE PATENTSCHRIFT

(11) **EP 1 066 745 B1**
(45) Veröffentlichungstag und Bekanntmachung des Hinweises auf die Patenterteilung: **25.01.2006**
(21) Anmeldenummer: 00250219.3
(22) Anmeldetag: 03.07.2000
(51) Int. Cl.: A01D 75/18, A01F 15/08, A01D 90/02, A01F 29/10, F16D 48/06

(54) **Verfahren und Einrichtung zur Steuerung der Förder- und Arbeitsorgane landwirtschaftlicher Erntemaschinen**
Method and device to control the transporting and working parts of agricultural harvesting machines
Méthode et dispositif de commande pour les organes de travail et transport des machines récolteuses agricoles

(30) Priorität: 08.07.1999 DE 19932272
(43) Veröffentlichungstag der Anmeldung: 10.01.2001
(73) Patentinhaber: Usines Claas France S.A., 57140 St. Remy / Woippy (FR)
(72) Erfinder: Bonnewitz, Bernard, 57130 Vaux (FR); Hawlas, Martin, 33428 Harsewinkel (DE); Mesmer, Denis, 57320 Bouzonville (FR); Nonhoff, Ansgar, 66798 Wallerfangen (DE); Scholz, Egbert, 33378 Rheda-Wiedenbrück (DE)
(74) Vertreter: Radwer, Dieter

(56) Entgegenhaltungen:
- DE-A- 3 532 000
- DE-A- 19 718 830
- DE-C- 4 101 610
- DE-C- 19 538 370
- US-A- 4 377 222
- US-A- 5 787 694

## Beschreibung

Die Erfindung betrifft ein Verfahren und eine Einrichtung zur Steuerung der Förder- und Arbeitsorgane landwirtschaftlicher Maschinen, insbesondere Ballenpressen, für die Sicherung eines kontinuierlichen Erntegutflusses und störungsfreien Ernteprozesses.

Agrotechnisch- und wachstumsbedingte Anhäufungen von Erntegut auf den Ernteflächen führen, wie allgemein bekannt, zu einem Erntegutstau an den Fördereinrichtungen und Arbeitsorganen einer Erntemaschine, beispielsweise am Rotor und/oder am Raffer einer Großballenpresse und können zu Havarien führen, die mit einem Totalausfall der Erntemaschine verbunden sind. Um die durch Erntegutstau an den Förder- und Arbeitsorganen verursachten Störungen und Totalausfälle zu unterbinden, sind in ihren Antriebssträngen Sicherheitseinrichtungen, beispielsweise schaltbare Kupplungen, vorgesehen, die bei Auftreten von Lastspitzen als Folge des Gutstaus den antriebseitigen Kraftfluß zwischen Getriebe und den Förder- und Arbeitsorganen unterbrechen und die bestehende Antriebsverbindung aufheben. Nach Beseitigung der Ursachen für das Erreichen von Lastspitzen und Wiederherstellung der Antriebsverbindung kann die Vorfahrt der Erntemaschine und der Ernteprozeß fortgesetzt werden.

Zu den Sicherheitseinrichtungen gehören neben einfachsten, mit Abscherelementen ausgestattete Verbindungen, schaltbare Überlastkupplungen, die den Kraftfluß in den Antriebssträngen bei gleichzeitiger Gewährleistung eines synchronen Zusammenwirkens zwischen den Förder- und Arbeitsorganen, wie beispielsweise zwischen Raffer und Preßkolben einer Ballenpresse, selbsttätig wieder herstellen. Die Unterbrechung der Antriebsverbindung, die Beseitigung der Ursachen für das Ansprechen der Sicherheitseinrichtungen und die Wiederherstellung der Antriebsverbindung sind regelmäßig mit Arbeitsstillstand und Leistungsausfall der Erntemaschinen verbunden.

Aus DE 197 18 830, 295 04 531 und 38 01 348 C2 sind Lösungen bekannt, die das Entstehen eines Erntegutstaues rechtzeitig erkennen und geeignete Maßnahmen zum Schutz der Förder- und Arbeitsorgane einleiten. Den in den Antriebssträngen vorgesehenen schaltbaren Sicherheitskupplungen sind Sensoren zugeordnet, die bei Über- oder Unterschreiten von Grenzdrehzahlen oder bei Auftreten eines Schlupfes die Arbeit des Raffers oder des Schneid- und Förderrotors durch Trennen der Sicherheitskupplung abschalten, bis der die Lastspitze auslösende Erntegutstau beseitigt und nach erneutem, selbständigem Schließen der Sicherheitskupplung die Förder- und Arbeitsorgane lastfrei wieder angefahren werden können, um den Ernteprozeß fortzusetzen.

Ein Überlastschutz für die Zapfwelle eines Schlepperfahrzeuges unter Verwendung von Drehzahlsensoren ist auch aus DE 41 01 610 C1 bekannt. Mit Hilfe der Sensoren wird der Schlupf zwischen dem treibenden und angetriebenen Teil einer mit Druck beaufschlagbaren Kupplung erfaßt und bei Überschreiten eines ersten eingestellten Wertes für das von der Kupplung zu übertragende Drehmoment, d.h. bei Entstehen eines Schlupfsignals, ein Warnsignal erzeugt und der Beaufschlagungsdruck der Kupplung auf ein übertragbares Höchstmoment gesteigert, das über dem zuvor eingestellten Drehmoment liegt. Tritt das Schlupfsignal innerhalb einer vorbestimmten Zeitspanne erneut auf, d.h. wird der zweite höhere Wert für das übertragbare Höchstmoment in der vorbestimmten Zeitspanne überschritten, löst die Sicherheitskupplung selbständig.

Lösungen, Überlastungen an den Förder- und Arbeitsorganen von landwirtschaftlichen Erntemaschinen rechtzeitig zu erkennen und vor einem zu starken Ansteigen selbsttätig abzubauen, um auf diese Weise durch eine geeignete Fahrstrategie die Maschinenauslastung zu verbessern und die Vorfahrt der Erntemaschine zu optimieren, sind aus DE 39 06 050 A1 und EP 0 524 454 B1 bekannt, wobei nach DE 39 06 050 A1 zum Abbau eines zu einer Überlastung führenden Erntegutstaus eine Erhöhung bzw. Überschreitung eines vorgegebenen Belastungsgrenzwertes für einen kurzen Zeittakt zugelassen wird.

Nach EP 0 524 454 B1 wird bei Überschreitung eines bereits erhöhten voreingestellten Belastungswertes im Antriebsstrang eine Steuervorrichtung für ein Stellmittel geschaltet, das das Schneidwerk mit den Messern zumindest über einen Teil der Tiefe des Förderkanals ausschwenkt. Ist der Zeittakt, in dem die voreingestellte, höhere Belastung des Antriebsstranges aufrechterhalten wurde, verstrichen, wird die Steuervorrichtung des Stellmittels nochmals aktiviert, um das Schneidwerk mit den Messern vollständig aus dem Förderkanal auszuschwenken. Nach Sinken der Belastung unter die voreingestellten Werte wird das Schneidwerk, vorzugsweise selbständig, wieder in seine normale Arbeitsposition eingeschwenkt.

Die vorstehend angeführten Lösungen gewährleisten einen hohen Sicherungsstandard gegen Überlastungen an den Förder- und Arbeitsorganen. Nachteilig ist jedoch, daß insbesondere bei Anwendung der Verfahren und Einrichtungen nach DE 39 06 050 A1 und EP 0 524 454 B1 der Versuch nahegelegt wird, durch eine geeignete Wahl der Vorfahrtsgeschwindigkeit einen störungsfreien Ernteprozeß zu erreichen und die durch Erntegutanhäufungen entstehenden Lastspitzen durch eine niedrigere, die Leistungsfähigkeit der Erntemaschine nicht ausschöpfende Vorfahrtsgeschwindigkeit zu vermeiden.

Der Erfindung liegt daher die Aufgabe zugrunde, mit einer weiterverbesserten Lösung der eingangs genannten Gattung das Entstehen von Lastspitzen an den Förder- und Arbeitsorganen frühzeitig zu detektieren und bei Gewährleistung eines hohen Überlastungsschutzes ein sicheres Arbeiten unter Auslastung des Leistungsvermögens der Erntemaschine zu erreichen.

Erfindungsgemäß wird die Aufgabe durch ein Verfahren nach den Merkmalen von Anspruch 1 und eine Einrichtung nach den Merkmalen von Anspruch 6 gelöst. Vorteilhafte Weiterbildungen der Erfindung ergeben sich aus den Unteransprüchen 2 bis 5 und 7.

Durch die vorliegende Erfindung werden Vorfahrtstops und Reversiervorgänge weitgehend ausgeschlossen, da das Entstehen von Lastspitzen als Folge einer Anhäufung des Erntegutes und des dadurch ausgelösten Entstehens von Blockaden an den Förder- und Arbeitsorganen frühzeitig erkannt und entsprechende Gegenmaßnahmen ohne Vorfahrtstop und Geschwindigkeitsreduzierung eingeleitet werden können. Bei einer sich anbahnenden Verstopfung oder Blockade am Schneid- und Förderrotor oder am Raffer muß der Ernteprozeß nicht in jedem Falle angehalten werden.

Wird der Lastanstieg in den Antriebssträngen, verursacht durch eine Anhäufung des Erntegutes, durch das Entstehen von Drehzahldifferenzen signalisiert, werden innerhalb eines begrenzten Zeittaktes der Arbeitsdruck in den schaltbaren Sicherheitskupplungen erhöht und die Gegenschneide des Schneid- und Förderrotors sowie der dem Schneid- und Förderrotor zugeordnete Schneidboden aus ihrer voreingestellten Betriebsstellung ausgeschwenkt, um die Voraussetzungen für ein schnelles Abarbeiten der die Lastspitze verursachenden Erntegutanhäufung zu ermöglichen. Dabei ist wesentlich, daß das Gegenmesser und der Schneidboden aus ihrer voreingestellten Betriebsstellung ausgeschwenkt werden, da hierdurch bei einer Lastspitze am Schneid- und Förderrotor und am Raffer der vorhandene Erntegutstau innerhalb kürzester Zeit abgearbeitet werden kann und bei einem eventuellen Stillsetzen des Rotors dieser für einen Neustart leichter gestartet werden kann.

Mit der erfindungsgemäßen Lösung erfolgt schlechthin nicht allein eine Ansteuerung des Ansprechverhaltens der Sicherheitseinrichtung, sondern eine Kombination der Steuerung des Abschaltmomentes der geregelten Sicherheitseinrichtungen mit der Regelung der Arbeitsspalten und Durchlaßweiten an den Arbeits- und Förderorganen zur Überwindung der Lastspitze ohne Maschinenstop und Gewährleistung eines hohen Sicherheitsstandards. Erst durch die Kombination der Steuerungen der geregelten Sicherheitseinrichtungen und der Arbeitsparameter an den Arbeits- und Förderorganen verringert sich die Wahrscheinlichkeit von Maschinenstillständen bei einem sich anbahnenden Erntegutstau erheblich.

Mit den durch die Maschinensteuerung eingeleitet Maßnahmen wird die mögliche Lastspitze verringert, wobei gleichzeitig sichergestellt ist, daß es durch die kurzzeitige Erhöhung des Abschaltmomentes der Sicherheitseinrichtungen nicht zu einem unerwünschten Maschinenstillstand kommt.

Gegenüber den bisher bekannten Sicherheitseinrichtungen besteht ein weiterer Vorteil darin, daß nach Abarbeiten der Materialgutanhäufung durch die eingeleiteten Maßnahmen, d.h. durch die Erhöhung des Druckes in den schaltbaren Kupplungen und Ausschwenken des Gegenmessers und des Schneidbodens, die Zuführ- und Arbeitsorgane der Erntemaschine selbsttätig in die voreingestellten Betriebsparameter für den Normalbetrieb zurückgestellt werden. Die erfindungsgemäße Lösung bietet weiterhin die Möglichkeit, den Prozeß für den Neustart des Schneid- und Förderrotors mehrmals zu wiederholen, um nach erfolgtem Neuanlauf den Ernteprozeß im Normalbetrieb fortzusetzen.

Ein Stillsetzen der Erntemaschine und eine manuelle Überprüfung der Arbeitsweise der Arbeits- und Förderorgane ist nur bei einer vollständigen Blockade, beispielsweise durch aufgenommene Fremdkörper, erforderlich.

Die Erfindung soll nachstehend am Beispiel einer Ballenpresse näher erläutert werden. In den dazugehörigen Zeichnungen zeigen:
- Fig. 1 -: den vorderen antriebsseitigen Teil einer Ballenpresse in Verbindung mit einer Draufsicht auf den Schneid- und Förderrotor und den Raffer in schematischer Darstellung
- Fig. 2 -: das Blockschaltbild des erfindungsgemäßen Verfahrens zur Steuerung der Arbeits- und Förderorgane der Ballenpresse

Die landwirtschaftliche Erntemaschine 1, im vorliegenden Beispiel eine Ballenpresse, ist bekanntermaßen geräteseitig mit einem Schlepperfahrzeug verbunden und verfügt für den Antrieb ihrer Förder- und Arbeitsorgane über ein Hauptgetriebe 4, das über eine am Gelenkwellenanschluß 2 angeschlossene Gelenkwelle mit der Zapfwelle des Schleppfahrzeuges verbunden ist und von dieser angetrieben wird. Zwischen dem Gelenkwellenanschluß 2 und dem Hauptgetriebe 4 befindet sich die Schwungscheibe 3, die eine Übertragung der im Betrieb auftretenden Schwingungen und Stöße auf den Gelenkwellenabtrieb des Schleppfahrzeuges verhindert und diese kompensiert. Der zum Formen der Erntegutballen im Preßkanal 24 linear bewegbare Preßkolben 5 wird über einen Kurbeltrieb 25 vom Hauptgetriebe 4 direkt angetrieben.

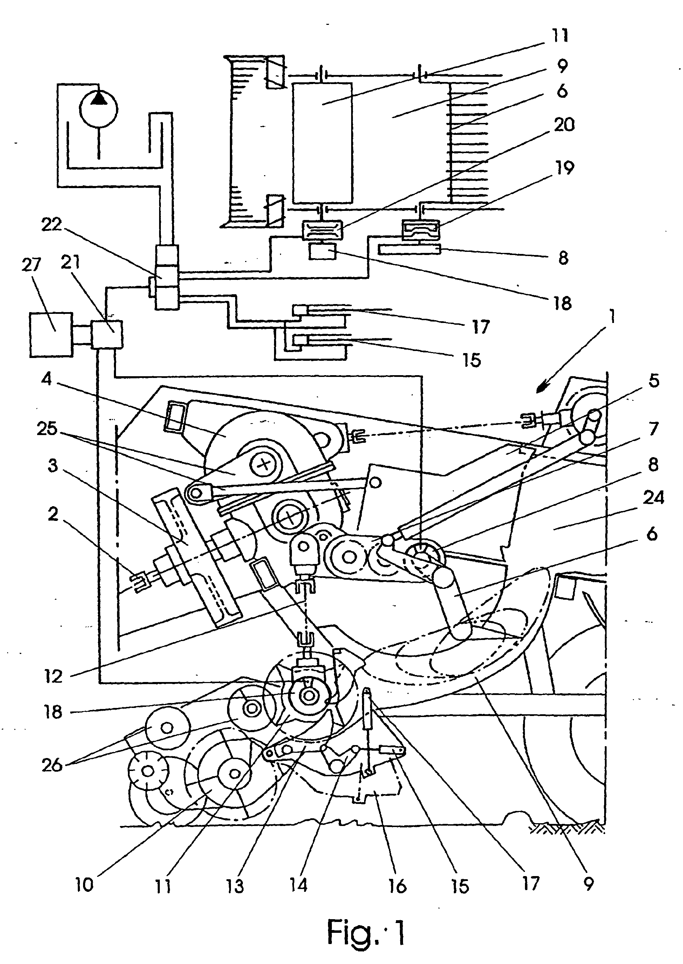

Vom Hauptgetriebe 4 ist ein Nebengetriebe 7 abgeleitet, das für den Antrieb des Raffers 6 dient, der innerhalb des Förderkanals 9 die strichpunktiert dargestellten Bewegungsabläufe ausführt. Der Förderkanal 9 mündet in den Preßkanal 24 und wird durch den Preßkolben 5 bei Erreichen seiner in der Figur 1 dargestellten Endlage freigegeben. Das zugeführte und geschnittene Erntegut wird durch den Raffer 6 im Förderkanal 9 vorverdichtet und nach Freigabe der Durchtrittsöffnung durch den Preßkolben aus dem Förderkanal 9 in den Preßkanal 24 transportiert.

In Zusammenwirken mit den Förderwalzen 26 wird das auf der Erntefläche befindliche Erntegut mit der Pickuptrommel 10 aufgenommen und dem Schneid- und Förderrotor 11 zugeführt. Der Schneid- und Förderrotor 11 wird ebenfalls vom Hauptgetriebe 4 über eine Gelenkwellenverbindung 12 angetrieben und besitzt eine verstellbare Gegenschneide 13. An die Gegenschneide ist ein zweiarmiger Winkelhebel verdrehbar angelenkt. Der Winkelhebel 14 ist mit einem Arbeitszylinder 15 verbunden, über den eine Verstellung der Gegenschneide zur Veränderung des Schneidspaltes vorgenommen werden kann. Dem Schneid- und Förderrotor 11 ist erfindungsgemäß ferner ein ausschwenkbarer Schneidboden 16 zugeordnet. Der Schneidboden 16 ist mit Hilfe des angelenkten Arbeitszylinders 17 ausschwenkbar angeordnet und bietet so die Möglichkeit, im Bedarfsfalle den Durchlaßquerschnitt zwischen dem Schneid- und Förderrotor 11 und dem Schneidboden 16 zu verändern.

Im Antrieb des Schneid- und Förderrotors 11 und des Raffers 6 sind schaltbare hydraulische Sicherheitskupplungen 19; 20 vorgesehen, die bei Auftreten von Belastungsspitzen zur Vermeidung von Zerstörungen an den Förder- und Arbeitsorganen die Antriebsverbindung unterbrechen. Um das Entstehen von Belastungsspitzen rechtzeitig zu erkennen und zu signalisieren, sind an den schaltbaren Kupplungen 19; 20 Sensoren 8 und 18 vorgesehen, die eingangsseitig mit einer Auswerteeinheit 21 verbunden sind und bei Auftreten von Drehzahldifferenzen infolge des Ansteigens des Belastungsmomentes in den schaltbaren Kupplungen ein Schlupfsignal an die Auswerteeinheit 21 abgeben.

Die Auswerteeinheit 21 ist ausgangsseitig mit einem Steuerblock 22 verbunden, der an die Zentralhydraulik der Erntemaschine angeschlossen ist. Am Ausgang des Steuerblockes 22 sind die hydraulischen Arbeitszylinder 15; 17 und die schaltbaren Kupplungen 19; 20 hydraulisch angeschlossen. Wie nachfolgend noch näher zu erläutern ist, werden bei Auftreten eines Schlupfsignals über die Auswerteeinheit 21 und den Steuerblock 22 die Arbeitszylinder 15; 17 und die schaltbaren Kupplungen 19; 20 betätigt, um geeignete Maßnahmen zum Abbau der Belastungsspitze rechtzeitig vor einer vollständigen Blockade, die mit einem Stillsetzen der Erntemaschine verbunden ist, einzuleiten.

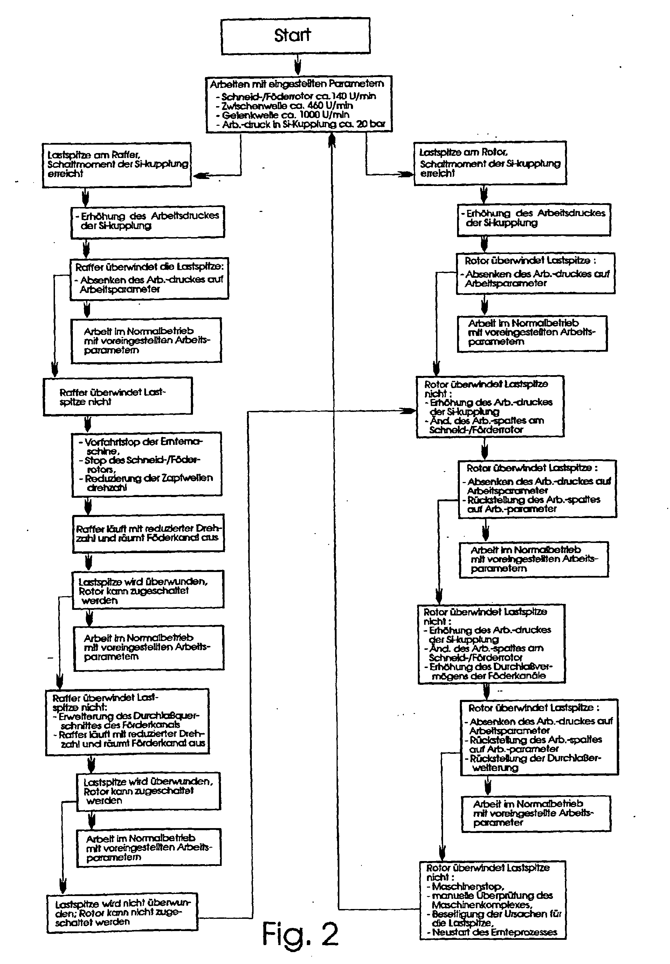

Der Ernteprozeß im Normalbetrieb wird unter Bezugnahme auf Fig. 2 mit dem Anlassen der Brennkraftmaschine des Schlepperfahrzeuges und Einschalten der Zapfwelle für den Antrieb der Ballenpresse gestartet. Die Hydraulikpumpe beginnt mit der Ölförderung, und in den schaltbaren Kupplungen 19; 20 wird ein Druck von ca. 20 bar aufgebaut. Der Schneid- und Förderrotor hat eine Umdrehungszahl von ca. 140 U/min. Die Drehzahl der Zwischenwelle beträgt ca. 459 U/min und die der Gelenkwelle des Zapfwellenantriebes ca. 1000 U/min.
Tritt innerhalb eines Zeitrasters von t = 2 sec infolge eines übergroßen Erntegutstaus eine Belastungsspitze am Schneid- und Förderrotor 11 auf, die zu einem Trennen der Sicherheitskupplung 19 führen könnte, werden die durch die Belastungsspitze verursachten Drehzahldifferenzen im Antrieb für den Schneid- und Förderrotor 11 mit Hilfe des Sensors 18 erfaßt und an die Auswerteeinheit 21 geleitet. Die Auswerteeinheit 21 erzeugt ein Schlupfsignal, das über den Steuerblock 22 für einen Zeittakt von t = 2 sec eine Druckerhöhung in der Kupplung 19 auslöst und gleichzeitig über die Arbeitszylinder 15 und 17, das Gegenmesser 13 und den Schneidboden 16 um ca. 5° ausschwenkt. Überwindet der Schneid- und Förderrotor 11 unter Fortsetzung des Ernteprozesses die Belastungsspitze, wird der erhöhte Arbeitsdruck für die schaltbare Kupplung 19 auf den voreingestellten Wert abgesenkt, die Gegenschneide 13 und der Schneidboden 16 in ihre voreingestellten Positionen zurückgeschwenkt und der Ernteprozeß im Normalbetrieb weitergeführt.

Kann der Rotor die Belastungsspitze bei erhöhtem Arbeitsdruck, ausgeschwenkter Gegenschneide 13 und ausgeschwenktem Schneidboden 16 innerhalb eines Zeittaktes von t = 2 sec nicht überwinden, wird der Schneid- und Förderrotor abgeschaltet, wobei die Gegenschneide 13 und der Schneidboden 16 ausgeschwenkt bleiben und die Kupplung 19 für einen Zeittakt von 5 sec drucklos ist. Anschließend wird der Schneid- und Förderrotor 11 für einen Zeittakt von t = 2 sec und einem erhöhten Arbeitsdruck in der schaltbaren Kupplung 19 bei ausgeschwenkter Gegenschneide 13 und Schneidboden 16 erneut gestartet.

Kann der Schneid- und Förderrotor 11 nach wiederholten Starts mit den vorgenannten Einstellparametern die Belastungsspitze nicht überwinden, wird die Erntemaschine 1 stillgesetzt und die Ursachen für die Blockade manuell festgestellt. Nach Beseitigung der Ursachen für die Blockade wird die Erntemaschine erneut gestartet und der Ernteprozeß mit den voreingestellten Betriebsparametern mit in ihrer Ausgangsposition eingestellter Gegenschneide 13 und zurückgeschwenktem Schneidboden 16 fortgesetzt.

Das Entstehen einer Belastungsspitze am Raffer 6, die zum Abschalten der Sicherheitskupplung 20 führen kann, wird durch das Erfassen der damit verbundenen Drehzahldifferenzen durch den Sensor 8 detektiert. Treten derartige Drehzahldifferenzen innerhalb eines Zeitrasters von t = 2 sec auf, wird der Schneid- und Förderrotor 11 sowie die Vorfahrt der Erntemaschine gestoppt und die Gegenschneide 13 zusammen mit dem Schneidboden 16 um ca. 5° aus ihrer voreingestellten Position ausgeschwenkt. Das Ausschwenken von Gegenschneide 13 und Schneidboden 16 ist insofern von Bedeutung, da dadurch der Neustart des Schneid- und Förderrotors 11 nach Abbau der Ursachen für die Belastungsspitze erleichtert werden kann. Nach Stopp des Schneid- und Förderrotors 11 und der Vorfahrt der Erntemaschine 1 wird die Zapfwellendrehzahl verringert und das im Förderkanal 9 befindliche Erntegut durch den Raffer 6 ausgeräumt.

Kann die Belastungsspitze nicht überwunden werden, wird die Durchlaßweite des Förderkanals 9 verändert und der Förderkanal 9 durch den Raffer 6 ausgeräumt.

Anschließend wird der Schneid- und Förderrotor 11 erneut gestartet und bei ordnungsgemäßem Anlauf des Rotors entsprechend den voreingestellten Betriebsparametern die Gegenschneide 13 und der Schneidboden 16 eingeschwenkt und die Veränderungen in der Durchlaßweite des Förderkanals 9 zurückgenommen.

Kann der Schneid- und Förderrotor nicht erneut gestartet werden, d.h. er kann die vorhandene Belastungsspitze nicht überwinden, bleiben Gegenschneide 13 und Schneidboden 16 bei gleichzeitigem Stillsetzen des Schneid- und Förderrotors 11 ausgeschwenkt.

Anschließend wird der Arbeitsdruck in der schaltbaren Kupplung 20 für einen Zeittakt von t = 2 sec erhöht und der Schneid- und Förderrotor 11 erneut gestartet, wobei Schneidmesser 13 und Schneidboden 16 ausgeschwenkt sind. Kann die Belastungsspitze nicht überwunden werden, d.h. der Schneid- und Förderrotor 11 kann nicht neu gestartet werden, muß die Erntemaschine 1 stillgesetzt und die Ursachen für die Blockade bei ausgeschwenkter Gegenschneide und Schneidbodenfestgestellt und gegebenenfalls beseitigt werden. Nach Beseitigung der Blockade wird die Erntemaschine neu gestartet und der Ernteprozeß mit den voreingestellten Betriebsparametern mit eingeschwenkter Gegenschneide und Schneidboden fortgesetzt.

### Bezugszeichenaufstellung

- 1: Erntemaschine/Ballenpresse
- 2: Gelenkwellenanschluß
- 3: Schwungscheibe
- 4: Hauptgetriebe
- 5: Preßkolben
- 6: Raffer
- 7: Nebengetriebe
- 8: Sensor
- 9: Förderkanal
- 10: Pickuptrommel
- 11: Schneid- und Förderrotor
- 12: Gelenkwelle
- 13: Gegenschneide
- 14: Winkelhebel
- 15: hydraulischer Arbeitszylinder
- 16: Schneidboden
- 17: hydraulischer Arbeitszylinder
- 18: Sensor
- 19: Sicherheitskupplung
- 20: Sicherheitskupplung
- 21: Auswerteeinheit
- 22: Steuerblock
- 23: Zentralhydraulik
- 24: Preßkanal
- 25: Kurbeltrieb
- 26: Förderwalze
- 27: elektron. Maschinensteuerung

## Patentansprüche

1. Verfahren zur Steuerung der Förder- und Arbeitsorgane landwirtschaftlicher Maschinen, insbesondere Ballenpressen, wobei innerhalb eines vorgegebenen Zeittaktes die im Antriebsstrang der Förder- und Arbeitsorgane auftretenden, auf einen Stau des Erntegutflusses hinweisenden Drehzahldifferenzen erfaßt, der voreingestellte Wert für die Belastung der Antriebsstränge, gegebenenfalls unter Änderung der Tiefe des Förderkanals verändert und nach Absinken der erhöhten Belastungen in den Antriebssträngen die vorgenommenen Änderungen in den Einstellungen für den normalen Erntebetrieb auf die voreingestellten Werte, selbsttätig zurückgesetzt werden, **dadurch gekennzeichnet, daß** die in den Antriebssträngen der Arbeits- und Förderorgane vorgesehenen schaltbaren Sicherheitseinrichtungen und Arbeitszylinder über die Maschinensteuerung in Abhängigkeit von den jeweiligen Belastungszuständen individuell angesteuert und bei Belastungsspitzen, die ein Ansprechen der Sicherheitseinrichtungen auslösen, innerhalb eines festgelegten Zeitrasters das Schaltmoment der Sicherheitseinrichtungen kurzzeitig erhöht, danach bei Fortbestehen der Belastungsspitze der Arbeitsspalt an den Arbeitsorganen und/oder das Durchsatzvermögen an den Förderorganen verändert und nach Beseitigung der Ursachen für die Belastungsspitzen der Arbeitsspalt und der Durchsatz des Erntegutes durch die Maschinensteuerung selbsttätig auf die voreingestellten Arbeitsparameter zurückgestellt werden.

2. Verfahren nach Anspruch 1, **dadurch gekennzeichnet, daß** bei Feststellung von Belastungsspitzen im Antriebsstrang des Schneid- und Förderrotors durch die Maschinensteuerung zunächst das Abschaltmoment der Sicherheitseinrichtung kurzzeitig erhöht, danach durch Ausschwenken der Gegenschneide des Schneid- und Förderrotors der Arbeitsspalt verändert und bei Fortbestehen der Belastungsspitze anschließend der Schneidboden ausgeschwenkt wird.

3. Verfahren nach Anspruch 1, **dadurch gekennzeichnet, daß** nach kurzzeitiger Erhöhung des Schaltmomentes der Sicherheitseinrichtung und Fortbestehen der Belastungsspitze im Antriebsstrang des Raffers durch die Maschinensteuerung die Vorfahrt der Erntemaschine und die Arbeit des Schneid- und Förderrotors gestoppt, die Gegenschneide und der Schneidboden am Schneid- und Förderrotor ausgeschwenkt und die Zapfwellendrehzahl reduziert werden, das im Förderkanal befindliche Erntegut bei niedriger Zapfwellendrehzahl unter allmählichem Druckaufbau des Arbeitsdruckes in der Sicherheitseinrichtung des Antriebsstranges durch den Raffer ausgeräumt wird und abschließend der Schneidund Förderrotor unter Zurückschwenken der Gegenschneide und des Schneidbodens selbsttätig wieder zugeschaltet werden.

4. Verfahren nach Anspruch 3, **dadurch gekennzeichnet, daß** bei Fortbestehen der Belastungsspitze am Raffer der Durchlaßquerschnitt des Förderkanals erweitert und das im Förderkanal befindliche Erntegut bei niedriger - Zapfwellendrehzahl unter allmählichem Druckaufbau des Arbeitsdruckes in der Sicherheitseinrichtung des Antriebsstranges durch den Raffer ausgeräumt wird.

5. Verfahren nach Anspruch 1 bis 4 **dadurch gekennzeichnet, daß** der Neustart des Schneid- und Förderrotors mit einem erhöhten Arbeitsdruck in den Sicherheitseinrichtungen und bei ausgeschwenkter Gegenschneide und ausgeschwenktem Schneidboden kurzzeitig wiederholt und nach Erreichen der Belastungswerte für den Normalbetrieb in den Antriebssträngen des Raffers und des Schneid- und Förderrotors der Ernteprozeß fortgesetzt wird.

6. Einrichtung zur Durchführung des Verfahrens nach Anspruch 1 unter Verwendung von schaltbaren Sicherheitskupplungen und Drehzahlsensoren in den Antriebssträngen für die Förder- und Arbeitsorgane, **dadurch gekennzeichnet, daß** die Erntemaschine (1) eine verstellbare Gegenschneide (13) und einen ausschwenkbaren Schneidboden (16) besitzt und die Drehzahlsensoren (8; 18) an den Eingang einer Auswerteeinheit (21) angeschlossen sind, die mit einem hydraulischen Steuerblock (22), an den ausgangsseitig schaltbaren Kupplungen (19; 20) und Arbeitszylindern (15; 17) zur Verstellung der Gegenschneide (13) und des Schneidbodens angeschaltet sind, verbunden ist.

7. Einrichtung nach Anspruch 6, **dadurch gekennzeichnet, daß** die verstellbare Gegenschneide (13) und der ausschwenkbare Schneidboden (16) dem Schneid- und Förderrotor (11) zugeordnet sind.

## Claims

1. Device for controlling conveyance and working organs of agricultural machinery, especially ball presses, whereby within a set rhythm of time the rotation speed differences in the drive of the conveyor and working organs which indicate a jam of the harvested product are recorded, changes the set value for the load of the drive system if needed by changing the depth of the conveyor channel and after reducing the increased load in the drive systems automatically returns the changed values in the settings to the normal harvest setting, **characterized by** the switchable safety devices and working cylinders foreseen for the drives of the working and conveying systems being controlled through the machine controls depending on the specific loads and with peak loads which set off safety devices within a set schedule increasing the switching moment of the safety devices briefly, then if the peak load continues changes the gap between the working organs and/or the flow capacity of the conveyors and after eliminating the causes for the peak loads of the working gap and the flow of the harvesting product by the machine controls automatically returns to the set working parameters.

2. Device in accordance with claim 1, **characterized by** the determining of peak loads in the drive system of the cutting and conveyor rotor by the machine controls, first the cut-off moment of the safety device is briefly increased, then by changed by swinging the counter-cutter of the cutting and conveyor rotor of the working gap and if the peak load continues then the cutting floor is swung out.

3. Device in accordance with claim 1, **characterized by** stopping the movement of the harvester and the work of the cutter and conveyor after a short-term increase of the switch moment of the safety device and continuing peak load in the drive system of the gatherer by the machine control, the counter-cutter and the cutting floor on the cutter and conveyor rotor are swung out and the rotation speed of the power take-off shaft is reduced, the harvest product in the conveyor is cleared out of the gatherer at a low rotation speed of the power take-off shaft with a slow pressure reduction of the working pressure in the safety device of the drive system and then the cutting and conveyor rotor are reconnected with the automatic return of the counter-cutter and the cutting floor.

4. Device in accordance with claim 3, **characterized by** the flow cross-section of the conveyor being expanded on the gatherer when the peak load continues and the harvested product in the conveyor channel cleared out by the gatherer at a low rotation speed of the power take-off shaft with a slow pressure reduction of the working pressure in the safety device of the drive system.

5. Device in accordance with claims 1 to 4, **characterized by** the restart of the cutting and conveyor rotor with an increased working pressure in the safety devices and a quick repetition with counter-cutters and cutting floor swung out and the harvesting process is continued after the peak load values are achieved for the normal operation in the drive systems of the gatherer and the cutting and conveyor rotor.

6. Device for performing the process in accordance with claim 1 using switchable safety clutches and rotation sensors in the drive systems for the conveyor and working organs, **characterized by** the harvester (1) having an adjustable counter-cutter (13) and a swingable cutting floor (16) and the rotation sensors (8; 18) connected to the entrance to the evaluation unit (21) which is connected with a hydraulic control block (22) at the exit of which controllable clutches (19; 20) and working cylinders (15;17) to adjust the counter-cutters (13) and the cutting floor are switched on.

7. Device in accordance with claim 6 **characterized by** the adjustable counter-cutter (13) and the swingable cutting floor (16) attached to the cutting and conveyor rotor (11).

## Revendications

1. Procédé pour la commande des organes de travail et d'alimentation des machines agricoles, notamment des presses à balles, les différences de régime de rotation indiquant un bourrage de la matière récoltée et apparaissant dans le train de transmission des organes de travail et d'alimentation étant détectées pour une séquence de temps prédéfinie, la valeur de charge préréglée des trains de transmission étant modifiée éventuellement en modifiant la profondeur du canal d'alimentation et, après un abaissement des charges trop élevées pour les trains de transmission, les modifications apportées aux réglages du fonctionnement normal de la récolte étant automatiquement ramenées jusqu'aux valeurs préréglées, **caractérisé en ce que** les limiteurs de couple de sécurité prévus dans les trains de transmission des organes de travail et d'alimentation et les vérins sont commandés par l'intermédiaire de la commande de la machine en fonction de chacun des états de charge, et en cas de pointes de charge déclenchant une réaction des dispositifs de sécurité, le moment de coupure des dispositifs de sécurité étant brièvement augmenté pour une séquence de temps définie, ensuite, en cas de persistance de la pointe de charge, la hauteur de travail des organes de travail et/ou le débit des organes d'alimentation étant modifiés et après avoir éliminé les causes des pointes de charge, la hauteur de travail et le débit de matière récoltée étant ramenés jusqu'aux paramètres de travail préréglés par la commande de la machine.

2. Procédé selon la revendication 1, **caractérisé en ce qu'**en cas de pointes de charge dans le train de transmission du rotor de coupe et d'alimentation, le moment de coupure du dispositif de sécurité est d'abord augmenté brièvement par la commande de la machine, ensuite, en faisant basculer la contre-lame du rotor de coupe et d'alimentation, la hauteur de travail est modifiée et, finalement, en cas de persistance de la pointe de charge le fond de coupe est basculé.

3. Procédé selon la revendication 1, **caractérisé en ce qu'**après avoir augmenté brièvement le moment de coupure du dispositif de sécurité et en cas de persistance de la pointe de charge dans le train de transmission de l'ameneur, la commande de la machine arrête l'avancement de la machine à récolter et le travail du rotor de coupe et d'alimentation, la contre-lame et le fond de coupe du rotor de coupe et d'alimentation sont basculés et le régime de rotation de l'arbre de prise de force est réduit, en cas de faible régime de rotation de l'arbre de prise de force, la matière récoltée se trouvant dans le canal d'alimentation est évacuée par l'ameneur en réduisant peu à peu la pression de travail dans le dispositif de sécurité du train de transmission, et finalement le rotor de coupe et d'alimentation est redémarré automatiquement en faisant basculer la contre-lame et le fond de coupe dans leur position initiale.

4. Procédé selon la revendication 3, **caractérisé en ce qu'**en cas de persistance de la pointe de charge dans l'ameneur, la section de passage du canal d'alimentation est élargie et, en cas de faible régime de rotation de l'arbre de prise de force, la matière récoltée se trouvant dans le canal d'alimentation est évacuée par l'ameneur en réduisant peu à peu la pression de travail dans le dispositif de sécurité du train de transmission.

5. Procédé selon la revendication 1 à 4, **caractérisé en ce que** le redémarrage du rotor de coupe et d'alimentation est brièvement effectué plusieurs fois à une pression de travail élevée dans les dispositifs de sécurité en faisant basculer la contre-lame et le fond de coupe, et la récolte est poursuivie après avoir atteint les valeurs de charge nécessaires au fonctionnement normal dans les trains de transmission de l'ameneur et du rotor de coupe et d'alimentation.

6. Dispositif pour la mise en oeuvre du procédé selon la revendication 1 utilisant des limiteurs de couple de sécurité et des capteurs de vitesse de rotation dans les trains de transmission des organes de travail et d'alimentation, **caractérisé en ce que** la machine à récolter (1) possède une contre-lame réglable (13) et un fond de coupe basculant (16) et les capteurs de vitesse de rotation (8;18) sont raccordés à l'entrée d'un module d'évaluation (21) qui est relié à un bloc de commande hydraulique (22) auquel sont appliqués, du côté sortie, des limiteurs de couple (19;20) et des vérins (15;17) destinés à déplacer la contre-lame (13) et le fond de coupe.

7. Dispositif selon la revendication 6, **caractérisé en ce que** la contre-lame (13) pouvant être déplacée et le fond de coupe (16) basculant sont associés au rotor de coupe et d'alimentation (11).
